(19) Europäisches Patentamt
European Patent Office
Office européen des brevets

(11) **EP 3 492 943 B1**

(12) **FASCICULE DE BREVET EUROPEEN**

(45) Date de publication et mention
de la délivrance du brevet:
**25.12.2024 Bulletin 2024/52**

(21) Numéro de dépôt: **18206948.4**

(22) Date de dépôt: **19.11.2018**

(51) Classification Internationale des Brevets (IPC):
**G01S 5/02** (2010.01)   **G01S 5/16** (2006.01)

(52) Classification Coopérative des Brevets (CPC):
**G01S 5/0289; G01S 5/0072; G01S 5/0242;
G01S 5/0278; G01S 5/16**

(54) **PROCÉDÉ ET SYSTÈME D'ESTIMATION DE POSITION PAR RECALAGE COLLABORATIF SUR AMERS DE POSITIONS IMPRECISES**

VERFAHREN UND SYSTEM ZUR POSITIONSSCHÄTZUNG DURCH GEMEINSAME POSITIONSBESTIMMUNG MIT HILFE VON BEZUGSMARKEN MIT UNPRÄZISEN POSITIONEN

METHOD AND SYSTEM FOR POSITION ESTIMATION BY COLLABORATIVE REPOSITIONING USING LANDMARKS WITH IMPRECISE POSITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2017 FR 1701210**

(43) Date de publication de la demande:
**05.06.2019 Bulletin 2019/23**

(73) Titulaire: **Thales
92400 Courbevoie (FR)**

(72) Inventeur: **HEURGUIER, Dominique
92622 GENNEVILLIERS CEDEX (FR)**

(74) Mandataire: **Atout PI Laplace
Immeuble Up On
25 Boulevard Romain Rolland
CS 40072
75685 Paris Cedex 14 (FR)**

(56) Documents cités:
**EP-A1- 2 785 124        US-A1- 2010 246 405
US-A1- 2011 059 752     US-A1- 2012 081 248**

## Description

L'objet de la présente invention concerne un procédé et un système permettant d'effectuer un recalage collaboratif global prenant en compte l'ensemble d'unités mobiles appartenant à un même groupe ainsi que des amers de positions imprécises, approximativement connues, en visibilité de plusieurs unités mobiles.

L'invention peut être utilisée pour un recalage cartographique avec des outils de relèvement classiques (relevé angulaire par pointage visuel et/ou relevé de distance avec un télémètre) sur des amers géographiques mais aussi pour un recalage sur des amers radios avec des unités radios mobiles capables d'effectuer des relèvements (goniométrie et/ou télémétrie radio).

Le mot « amer » désigne un objet fixe remarquable de l'environnement connu du système. Par extension, le mot « amer radio » désigne un émetteur radio connu du système. Ce dernier peut être éventuellement mobile, mais dans ce cas sa position est approximativement connue par le système.

Le terme groupe est utilisé pour désigner un ensemble d'unités mobiles, ou plateformes qui sont programmées pour communiquer entre elles et s'échanger des informations. Le mot « visibilité » est utilisé pour préciser qu'un amer est détecté, visuellement ou par radio s'il s'agit d'un amer radio, et que la plateforme est capable d'effectuer des relevés sur cet amer.

Dans la suite de la description, le mot noeud désigne indifféremment une plateforme et/ou un amer.

Le mot recalage est utilisé pour désigner un repositionnement d'une plateforme.

Le recalage sur amer est une technique connue pour permettre à un noeud mobile de recaler sa position, c'est-à-dire améliorer la précision de sa géolocalisation et se repositionner.

L'un des problèmes techniques est l'insuffisance dans la précision du recalage lorsque les précisions de mesures sont faibles et/ou lorsque les positions des amers sont trop imprécises.

Le recalage sur amer repose sur la mesure de direction des amers (goniométrie), éventuellement complétée de mesures de distances (télémétrie) et d'un algorithme de géolocalisation prenant en compte éventuellement les précisions de mesures et, plus rarement, l'imprécision de position des amers. Les imprécisions sont généralement caractérisées par l'homme du métier par un intervalle d'incertitude, une erreur circulaire probable « Circular Error Probability, CEP » à x % ou par une variance.

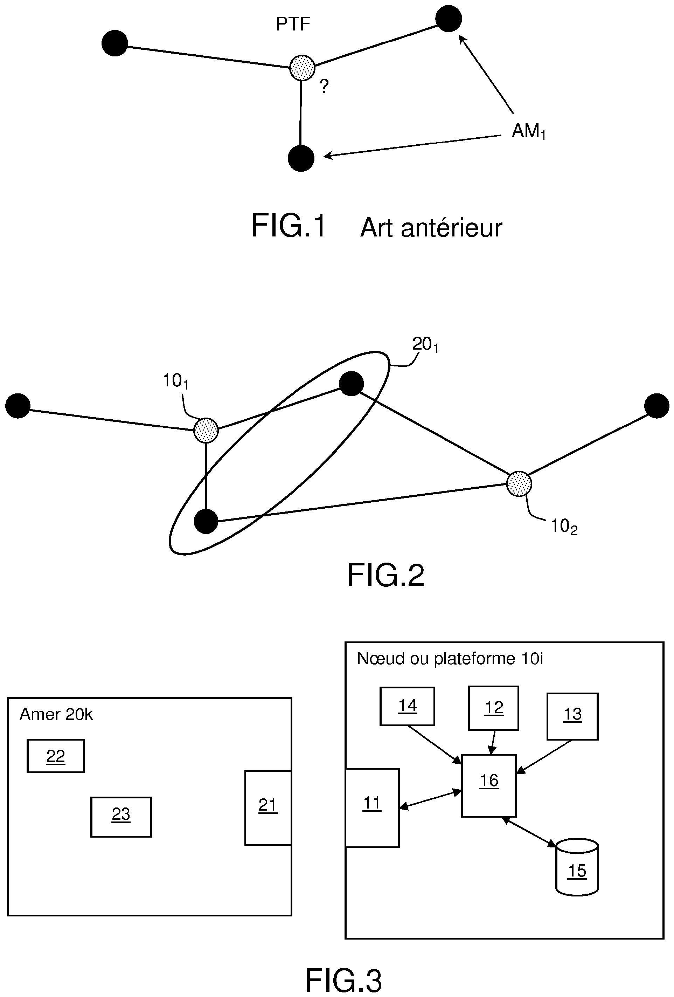

La figure 1 illustre une solution connue de l'art antérieur pour le recalage d'une seule plateforme. La technique effectue une relocalisation d'une plateforme PTF par triangulation sur trois amers AM1 de positions connues, en effectuant un relevé des directions des amers suivi d'une triangulation. La précision de cette technique est limitée par les erreurs de mesures et la précision des amers.

L'un des inconvénients des méthodes connues de l'art antérieur est le biais (erreur sur la position) introduit par les imprécisions éventuelles sur les positions des amers ainsi que l'imprécision des mesures qui ne permettent pas toujours un recalage précis.

Le document US 2012/0081248 A1 décrit un système et un procédé pour localiser une station mobile. Pour cela, US 2012/0081248 A1 effectue des mesures de télémétrie sur les signaux RF reçus ; classifie les signaux RF selon un critère prédéterminé de paramètres et, en fonction des mesures de télémétries effectuées et du classement des signaux reçus, le procédé va déterminer une position d'un mobile ; les signaux RF comprennent au moins un signal synchronisé et un signal non synchronisé.

Le document US 2011/0059752 A1 décrit un procédé pour estimer l'emplacement de stations mobiles dans un réseau et ne pose pas le problème de la mesure de goniométrie.

L'invention concerne un procédé de recalage collaboratif selon la revendication 1.

Selon une variante de réalisation, une ou plusieurs plateformes du réseau jouent le rôle d'amer radio pour les autres plateformes, la ou lesdites plateformes étant configurées pour permettre un recalage collaboratif et les nouvelles coordonnées étant également transmises aux plateformes jouant le rôle d'amer.

Le vecteur d'état u est, par exemple estimé en maximisant la probabilité :

$$p(m/u) = \frac{1}{(2\pi)^{\frac{N}{2}} |B|^{1/2}} \exp\left( -\frac{1}{2} [m - h(u)]^T B^{-1} [m - h(u)] \right)$$

avec N la dimension du vecteur d'observation, B, la matrice de covariance des mesures, h(u), la fonction d'observation globale du vecteur d'état *u*, T la transposée.

Le vecteur u peut aussi être estimé en minimisant la forme quadratique :

$$Q(u) = [m - h(u)]^T B^{-1} [m - h(u)]$$

avec N la dimension du vecteur d'observation, B la matrice de covariance des mesures, h($u$), la fonction d'observation de $u$, T la transposée.

Le procédé peut utiliser l'algorithme de Gauss-Newton et exécuter les étapes suivantes :

Développement du vecteur d'état $h(u)$ au premier ordre :

$$h(u) = h(u_0) + H(u - u_0)$$

Calcul de la matrice Jacobienne H, de dimension (2M+L+K, 2M) de la fonction d'observation globale.

$$H = \begin{bmatrix} & \vdots & \vdots & \\ \cdots & \dfrac{\partial h_i}{\partial x_j} & \dfrac{\partial h_1}{\partial y_j} & \cdots \\ & \vdots & \vdots & \end{bmatrix}$$

Les observations angulaires conduisent aux sous-matrices suivantes :

$$H_p = \begin{bmatrix} & & & \vdots & & & \\ \cdots & -\dfrac{y_i - y_j}{d_{ij}^2} & \dfrac{x_{im} - x_j}{d_{ij}^2} & \cdots \dfrac{y_i - y_j}{d_{ij}^2} & -\dfrac{x_{im} - x_j}{d_{ij}^2} & \cdots \\ & & & \vdots & & & \end{bmatrix}$$

où

$$d_{ij} = \sqrt{(x_i - x_j)^2 + (y_i - y_j)^2}$$

Les observations de distance conduisent aux sous-matrices suivantes :

$$H_d = \begin{bmatrix} & & & \vdots & & & \\ \cdots & -(x_i - x_j)/d_{icj} & -(y_i - y_j)/d_{ij} & \cdots (x_i - x_j)/d_{icj} & -(y_i - y_j)/d_{ij} & \cdots \\ & & & \vdots & & & \end{bmatrix}$$

où

$$d_{ij} = \sqrt{(x_i - x_j)^2 + (y_i - y_j)^2}$$

L'initialisation $u_0$ est définie par les positions initiales du ou des amers et des plateformes :

$$u_o = \begin{bmatrix} \vdots \\ x_i \\ y_i \\ \vdots \end{bmatrix}$$

Pour une linéarisation du problème en $u_0$, le gradient du critère Q s'écrit :

$$\nabla Q = 2.H^T.B^{-1}\left[m - h(u_0) - H(u - u_0)\right]$$

avec $^T$ signifiant le transposé et l'estimateur du maximum de vraisemblance a pour expression

$$\hat{u} = u_0 + \left( H^T B^{-1} H \right)^{-1} H^T B^{-1} \left[ m - h(u_0) \right],$$

On itère de façon linéaire sur ledit estimateur du maximum de vraisemblance et on arrête en définissant comme critère d'arrêt un seuil sur la norme de $\|u_i - u_{i-1}\|$ correspondant à l'ensemble des noeuds.

Le procédé selon l'invention permet de repositionner ou de recaler la position de plateformes et d'amers dans un réseau de communication radio.

L'invention concerne aussi un système selon la revendication 5. •

Le système peut comporter au moins un amer radio comprenant un module de communication configuré pour échanger des informations avec les plateformes, un dispositif de mesures de distance, un dispositif de mesures d'angle.

Une plateforme comprend, par exemple, une base de données contenant les positions du ou des amers utilisés.

D'autres caractéristiques et avantages de la présente invention apparaîtront mieux à la lecture de la description, d'exemples de réalisation donnés à titre illustratif et non limitatif, annexée des figures qui représentent :

- Figure 1, une solution connue de l'art antérieur,
- Figure 2, un exemple de détails des modules équipant les plateformes et les amers permettant la mise en oeuvre de l'invention,
- Figure 3, un schéma de principe du procédé et du système selon l'invention,
- Figure 4, une illustration de la façon dont l'exemple de la figure 3 serait traité par l'art antérieur : deux recalages individuels sur les deux amers, et
- Figure 5, une variante de réalisation du procédé décrit à la figure 3.

Le procédé selon cette invention consiste, notamment, à effectuer des recalages collaboratifs simultanés. Le principe suppose la présence d'au moins un amer AM1 perçu par au moins deux plateformes PTF1, PTF2 du réseau collaboratif. La réestimation de position des plateformes est effectuée conjointement, par exemple en mettant en oeuvre un critère de moindres carrés pondérés ou une technique de maximum de vraisemblance global, bien connus de l'homme du métier. La prise en compte globale des contraintes d'amers communs et de leurs précisions augmente la précision de géolocalisation par rapport à des recalages individuels « classiques ».

La figure 3 représente un exemple d'application de l'invention dans un groupe comprenant au moins deux plateformes observant au moins un amer.

Une plateforme ou noeud 10i comprend au moins un premier module de communication 11 configuré pour recevoir des informations ou des données en provenance d'une autre plateforme, et pour émettre des informations vers ces mêmes éléments. Elle comporte aussi un module de mesures de distance 12, et un dispositif de mesures d'angle 13, un dispositif 14 permettant une estimation des positions et un module de recalage 16 de la position des plateformes (tel qu'un processeur) ayant notamment pour fonction de recalculer la position des plateformes. Une base de données 15 permet de mémoriser des positions d'un ou de plusieurs amers. Les amers exploités pour un recalage peuvent être communs à plusieurs plateformes, i.e., commun signifiant que les plateformes d'un groupe de communication vont utiliser ce(s) même(s) amer(s) de position approximativement connue pour recalculer leur position avec une meilleure précision et se recaler, i.e., repositionnement de manière plus précise. Les informations de recalage (nouvelles positions obtenues après la mise en oeuvre du procédé) seront transmises aux plateformes et aux amers faisant partie d'un même groupe afin qu'ils mettent à jour leur base de données par le medium de communication.

Dans le cas particulier d'un amer radio 20k, celui-ci comprend les mêmes équipements qu'une plateforme : un module de communication 21 configuré pour échanger des informations avec un autre amer radio et/ou une plateforme du groupe de communication auquel elle appartient. L'amer radio comprend aussi éventuellement un dispositif de mesure de distance 22, et/ou un dispositif de mesures d'angle 23. Pour un amer radio, il n'est pas nécessaire qu'il puisse effectuer des mesures lui-même, mais au minimum, l'amer radio est configuré pour permettre à des plateformes des mesures de distances par rapport à lui.

L'un des objectifs de la présente invention est de permettre à une plateforme de connaître sa position avec une meilleure précision afin de se repositionner. L'information de position corrigée pour la plateforme recalée peut être transmise aux autres plateformes qui sont en communication avec cette plateforme recalée.

La figure 3 représente une première variante de réalisation pour le recalage collaboratif de plateformes 10i sur amers 20k connus avec des positions imprécises. Au moins deux plateformes $10_1$, $10_2$ observent au moins un amer $20_1$ commun de position connue mais imprécise. Dans l'exemple donné, les plateformes communiquent par liaisons radios.

La position de l'amer est par exemple connue initialement, chaque plateforme possédant une base de données regroupant l'identifiant d'un amer et sa position en deux dimensions définie par exemple dans un repère cartésien, ainsi que la précision de la position de l'amer. Les plateformes peuvent s'échanger des informations sur les amers (identifiant, position) et se mettre d'accord pour établir une liste d'amers en commun L{amers en commun}.

Afin de bien faire comprendre les étapes du procédé mises en oeuvre par l'invention, l'exemple qui suit est donné dans le cas de deux plateformes, $10_1$, $10_2$, deux amers $20_1$, $20_2$, et en mettant en oeuvre des mesures de distance et de goniométries sur les deux amers.

On considère les données suivantes :

$P_1$: $(x_1,y_1)$ les coordonnées de la plateforme $10_1$ connues avec une précision $\sigma_x = \sigma_y = 50m$ , où la lettre $\sigma$ désigne l'écart-type,

$P_2$: $(x_2,y_2)$ les coordonnées de la plateforme $10_2$ connues avec une précision $\sigma_x = \sigma_y = 50m$ ,

$A_1$: $(x_{a1},y_{a1})$ les coordonnées de l'amer $20_1$ connues avec une précision $\sigma_x = \sigma_y = 50m$,

$A_2$: $(x_{a2},y_{a2})$ les coordonnées de l'amer $20_2$ connues avec une précision $\sigma_x = \sigma_y = 50m$,

$R_{ij}$ la mesure de distance de la plateforme $10_i$ sur l'amer $20_j$ avec une précision $\sigma_d = 1m$

$A_{ij}$ la mesure d'angle de la plateforme $10_i$ sur l'amer $20_j$ avec une précision $\sigma_a = 1m$.

Il est bien entendu que, sans sortir du cadre de l'invention, la description qui suit reste valable dans le cas de deux plateformes et d'un seul amer pour exécuter le recalage de position.

Les dispositifs des plateformes ont effectués chacun les mesures suivantes:

- Le dispositif de mesure de position estime quatre positions initiales pour les plateformes et les amers: $P_1, P_2, A_1, A_2$ et leurs covariances respectives,
- Le dispositif de mesure de distance détermine les quatre mesures de distance $R_{ij}$ (entre chacune des plateformes et chaque amer, $R_{ij}(10_1, 20_2)$, $R_{ij}(10_i, 20_1)$, $R_{ij}(10_2, 20_1)$, $R_{ij}(10_2, 20_2)$), et leurs variances respectives, les variances interviennent dans la construction de la matrice de covariance B du vecteur de mesure m : B= E[(m-E(m)).(mE(m))$^t$] = E(m.m$^t$)-E(m).E(m)$^t$, ou E désigne l'espérance mathématique. Le ième sigma, $\sigma_i$ de la diagonale de B, correspond à la variance de la ième mesure considérée et les autres termes croisés (non diagonaux) de la matrice de covariance sont nuls sous l'hypothèse d'indépendances des mesures,
- Le dispositif de mesure d'angle va déterminer les quatre mesures d'angle $A_{ij}$ ($A_{ij}(10_1, 20_2)$, $A_{ij}(10_1, 20_1)$, $A_{ij}(10_2, 20_1)$, $A_{ij}(10_2, 20_2)$) et leurs variances respectives.

A partir de ces mesures de positions, de distances et/ou d'angles, le procédé va estimer de manière plus précise la position d'au moins une plateforme, ce qui permet son recalage, notamment en cas de dérive trop importante par rapport à sa position de départ. Dans l'exemple qui suit, le traitement s'appuie sur une estimation de position mettant en oeuvre un critère de type maximum de vraisemblance, bien connu de l'homme de l'art.

On considère un vecteur d'état u constitué des positions des plateformes (dans l'exemple : deux plateformes) et des amers de position connue (dans l'exemple : deux amers), soit dans l'exemple : u = [$P_1P_2A_1A_2$] avec $P_1,P_2,A_1,A_2$ les sous vecteurs contenant les coordonnées des positions des plateformes et des amers.

D'une façon générale, on dispose :

- De M mesures de position des plateformes et des amers, une observation de position par noeud (plateforme ou amer),
- De L mesures d'angles disponibles sur les noeuds, avec au plus une mesure d'angle pour chaque couple d'entités (plateforme, amer),
- De K mesures de distances disponibles sur les noeuds, la distance étant considérée entre une plateforme et un amer.

Le vecteur d'observation m de dimension N=2M+L+K mesures est déterminé à partir de l'ensemble de ces mesures :

$$m = \begin{bmatrix} m_1 \\ \vdots \\ m_N \end{bmatrix}$$

, chaque observation $m_i$ d'une position correspond à deux observations $x_i$ et $y_i$.

Le vecteur d'état u (vecteur des positions des noeuds) est de dimension 2M. Il va être estimé en utilisant un critère de maximum de vraisemblance prenant en compte le vecteur d'observation m représentatif de l'ensemble des positions des plateformes et de l'amer ou des amers considérés.

Les mesures sont supposées indépendantes gaussiennes centrées et la densité de probabilité des mesures a pour expression :

$$p(m/u) = \frac{1}{(2\pi)^{\frac{N}{2}} |B|^{1/2}} \exp\left( -\frac{1}{2}[m - h(u)]^T B^{-1}[m - h(u)] \right)$$

où h() est la fonction d'observation globale, explicitée ci-après :

La matrice de covariance du bruit de mesure, de dimension 2M+L+K, a pour expression :

$$B = \begin{bmatrix} \ddots & & & \ddots & & & 0 \\ & \sigma_x^2 & & & 0 & \ddots & \\ & & \sigma_y^2 & & & \ddots & \ddots \\ \ddots & & & \sigma_\theta^2 & & & \\ & 0 & \ddots & & \sigma_d^2 & & \\ & \ddots & \ddots & & & \ddots & \\ 0 & & & & & & \ddots \end{bmatrix}$$

Si les coordonnées des positions de certains noeuds (plateforme et/ou amer) ne sont pas indépendantes et sont connues avec une covariance sur les positions x,y, les sous matrices de covariance de position seront de la forme $\begin{bmatrix} \sigma_x^2 & \sigma_{xy} \\ \sigma_{xy} & \sigma_y^2 \end{bmatrix}$ plutôt que $\begin{bmatrix} \sigma_x^2 & 0 \\ 0 & \sigma_y^2 \end{bmatrix}$.

La fonction d'observation globale h : m=h(u), avec m le vecteur d'observation, u le vecteur d'état des positions des noeuds (plateforme et/ou amer) est constituée :

-   de la fonction d'observation $h_p$ des positions,
-   de la fonction d'observation $h_a$ des angles,
-   de la fonction d'observation $h_d$ des distances.

La notion de fonction d'observation de position $h_p$, d'angle $h_a$ et de distance $h_d$ est bien connue de l'homme du métier et ne sera pas explicitée.

Si on observe de façon non bruitée un noeud i de coordonnées Mi (xi, yi), on a :

$$h_p(x_i, y_i) = (x_i, y_i)$$

Si on observe de façon non bruitée la direction d'un noeud j de coordonnées Mj (xj, yj) à partir d'un noeud Mi (xi, yi), on a :

$h_a(x_i, y_i, x_j, y_j)$ = atan($y_j$- $y_i$, $x_j$- $x_i$), fonction d'observation des angles,

Si on observe de façon non bruitée la distance d'un noeud j de coordonnées Mj (xj, yj) à partir d'un noeud Mi (xi, yi) (distance entre le noeud i et le noeud j), on a :

$$h_d(x_i, y_i, x_j, y_j) = \sqrt{(x_j - x_i)^2 + (y_j - y_i)^2}$$

Sous les hypothèses de bruit précédentes (observation bruitée avec un bruit gaussien centré), le vecteur de position u peut être estimé de façon optimale avec un critère du maximum de vraisemblance. Le critère consiste alors à maximiser la probabilité $p(m/u)$ ou indifféremment à minimiser la forme quadratique Q(u) = [m - h(u)]$^T$ B$^{-1}$ [m - h(u)].

Pour ceci, il est possible d'utiliser l'algorithme de Gauss-Newton, bien connu des gens du métier et d'exécuter les étapes décrites ci-après.

On effectue un développement du vecteur d'état h(u) au premier ordre :

$$h(u) = h(u_0) + H(u - u_0)$$

On calcule la matrice jacobienne H, de dimension (2M+L+K, 2M) de la fonction d'observation globale :

$$H = \begin{bmatrix} & \vdots & & \vdots & \\ \cdots & \dfrac{\partial h_i}{\partial x_j} & \dfrac{\partial h_1}{\partial y_j} & \cdots \\ & \vdots & & \vdots & \end{bmatrix}$$

La matrice H est constituée des sous-matrices jacobiennes des fonctions d'observation $h_p$ $h_a$ et $h_d$ :

$$H = \begin{bmatrix} \vdots \\ H_p \\ H_d \\ H_a \\ \vdots \end{bmatrix}$$

Les observations de position conduisent aux sous-matrices suivantes :

$$H_p = \begin{bmatrix} & & \vdots & & \\ \cdots & 1 & 0 & \cdots \\ & 0 & 1 & \\ & & \vdots & & \end{bmatrix}$$

Les observations angulaires conduisent aux sous-matrices suivantes :

$$H_a = \begin{bmatrix} & & & & \vdots & & & & \\ \cdots & -\dfrac{y_i - y_j}{d_{ij}^2} & \dfrac{x_{im} - x_j}{d_{ij}^2} & \cdots & \dfrac{y_i - y_j}{d_{ij}^2} & -\dfrac{x_{im} - x_j}{d_{ij}^2} & \cdots \\ & & & & \vdots & & & & \end{bmatrix}$$

où

$$d_{ij} = \sqrt{\left(x_i - x_j\right)^2 + \left(y_i - y_j\right)^2}$$

Les observations de distance conduisent aux sous-matrices suivantes :

$$H_d = \begin{bmatrix} & & & & \vdots & & & & \\ \cdots & -\left(x_i - x_j\right)/d_{icj} & -\left(y_i - y_j\right)/d_{ij} & \cdots\left(x_i - x_j\right)/d_{icj} & -\left(y_i - y_j\right)/d_{ij} & \cdots \\ & & & & \vdots & & & & \end{bmatrix}$$

où

$$d_{ij} = \sqrt{\left(x_i - x_j\right)^2 + \left(y_i - y_j\right)^2}$$

L'initialisation du vecteur d'état $u_0$ est définie par les positions initiales des amers et des noeuds :

$$u_o = \begin{bmatrix} \vdots \\ x_i \\ y_i \\ \vdots \end{bmatrix}$$

Pour une linéarisation du problème en $u_0$, le gradient du critère Q s'écrit :
$\nabla Q = 2.H^T.B^{-1}[m - h(u_0) - H(u - u_0)]$ avec $^T$ signifiant le transposé et l'estimateur du maximum de vraisemblance a pour expression :

$$\hat{u} = u_0 + \left(H^T B^{-1} H\right)^{-1} H^T B^{-1} \left[m - h(u_0)\right].$$

L'estimateur du max de vraisemblance s'écrit alors :
$\hat{u}_i = u_0 + A.Y$ estimation sur tous les noeuds, $\hat{u}_i$ regroupe toutes les estimations de position pour tous les noeuds, avec :

$$Y = \begin{bmatrix} \vdots \\ a_{ij} - a_{Oij} \\ d_{ij} - d_{Oij} \\ x_i - x_{io} \\ y_i - y_{io} \\ \vdots \end{bmatrix}$$

$$A = \left(H^T B^{-1} H\right)^{-1} H^t B^{-1}$$

$a_{ij}$ -$a_{Oij}$ correspond au résidu, c'est-à-dire à la différence entre les mesures d'angles et les valeurs théoriques calculées avec la fonction d'observation $h_a$ en prenant pour position les positions estimées.
La matrice de covariance de l'estimateur a pour valeur :

$$P = \left(H^T B^{-1} H\right)^{-1}$$

Cette estimation $\hat{u}_i = u_0 + A.Y$ peut ensuite être itérée en faisant une estimation linéaire et en définissant le critère d'arrêt par un seuil sur la norme de $\|u_i - u_{i-1}\|$ correspondant à l'ensemble des noeuds.
En final on a obtenu un vecteur comprenant toutes les réestimations de position pour tous les noeuds, c'est-à-dire de l'ensemble des plateformes et des amers.
Les deux premières composantes de la valeur estimée du vecteur u donnent l'estimation de la position du premier noeud et les composantes $u_{2j-1}$ et $u_{2j}$ donnent les composantes x, y du jième noeud.
Déduire à partir du vecteur d'état estimé et conjointement, les coordonnées des positions d'au moins deux plateformes et d'un amer et transmettre ces nouvelles coordonnées aux plateformes et amers en contact avec lesdites plateformes recalées.
A partir du vecteur d'état estimé on va déduire, de manière conjointe, les coordonnées des positions d'au moins deux plateformes et d'un amer. Le procédé transmettra ensuite ces nouvelles coordonnées aux plateformes et amers en relation avec les plateformes recalées. Ces informations actualisées de position sont transmises d'une plateforme vers les autres plateformes de façon à optimiser la tenue de situation.

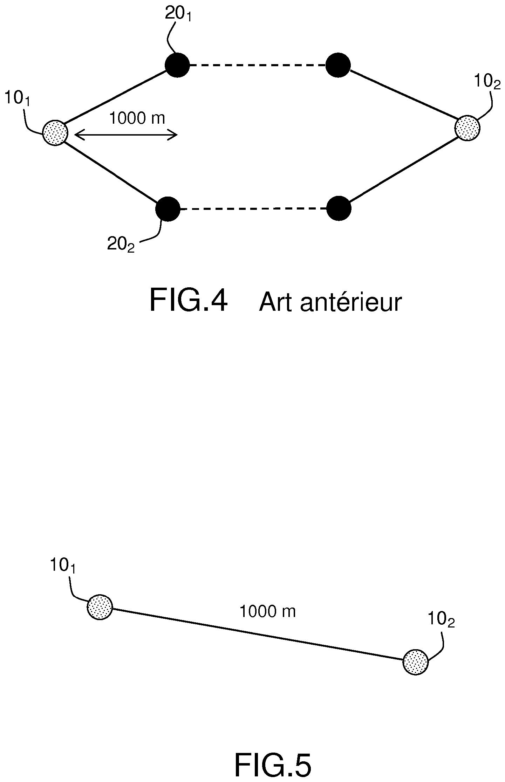

La figure 4 illustre la manière de recaler les plateformes selon l'art antérieur. Une plateforme $10_1$, $10_2$, serait recalée de manière individuelle sur les deux amers $20_1$, $20_2$.

Une extension du cas d'application précédent est la prise en considération d'amers radio. Ceci est particulièrement utile en l'absence d'amers géographiques, car une, plusieurs, ou idéalement toutes les plateformes peuvent alors jouer le rôle d'amer radio afin de permettre un recalage globale de l'ensemble des plateformes. Afin d'illustrer ce cas d'application, nous considérons un second exemple constitué seulement de deux plateformes, jouant également chacune le rôle d'amer radio pour la seconde.

Dans ce second exemple : u = [P1 P2] avec $P_1, P_2$ les sous vecteurs contenant les coordonnées des positions.

Pour cet exemple, on suppose que chaque plateforme n'effectue qu'une mesure d'angle sur l'autre plateforme.

Un premier exemple chiffré est donné ci-après avec M=4

$P_1$ : (0,0) coordonnées de la plateforme $10_1$ connues avec une précision $\sigma x = \sigma y = 50$ m

$P_2$ : (2000,0) coordonnées de la plateforme $10_2$ connues avec une précision $\sigma_x = \sigma_y = 50$m

$A_1$ : (1000,1000) coordonnées de l'amer $20_1$ connues avec une précision $\sigma_x = \sigma_y = 50$m

$A_2$ : (1000,-1000) coordonnées de l'amer $20_2$ connues avec une précision $\sigma_x = \sigma_y = 50$m.

L'écart-type de précision (en x et en y) des plateformes après recalage est de 26 m, soit un gain de l'ordre de 50% sur la précision initiale. Le gain relatif vis-à-vis d'un recalage individuel est de l'ordre de 20%.

La figure 5 décrit un exemple de recalage collaboratif inter plateforme dans le cas où au moins une plateforme $10_1$ joue le rôle d'amer radio pour une autre plateforme $10_2$, par exemple. Avec deux plateformes et des mesures de goniométries réciproques entre plateformes, le procédé permet d'obtenir les précisions données ci-après.

Soit :

$P_1$ : $(x_1, y_1)$ les coordonnées de la plateforme $10_1$ connues avec une précision

$$\sigma_x = \sigma_y = 50m$$

$P_2$ : $(x_2, y_2)$ les coordonnées de la plateforme $10_2$ connues avec une précision $\sigma_x = \sigma_y = 50$m

$A_{12}$ la mesure d'angle de la plateforme $10_1$ sur la plateforme $10_2$ avec une précision $\sigma_a = 1°$

$A_{21}$ la mesure d'angle de la plateforme $10_2$ sur la plateforme $10_1$ avec une précision $\sigma_a = 1°$

Les mesures disponibles sont :

Les deux estimations initiales de position: P1, P2 et leurs covariances respectives.

Les deux mesures d'angle $A_{12}$ et $A_{21}$ et leurs variances respectives.

L'écart-type de précision (en x et en y) des plateformes après recalage est de 44 m, soit un gain de l'ordre de 10% sur la précision initiale. Le gain relatif vis-à-vis d'un recalage individuel serait de l'ordre de 30% si les plateformes effectuaient en plus des mesures de distances avec une précision de 1 mètre.

Le procédé selon l'invention permet avantageusement, après recalage, d'obtenir des positions d'unités mobiles au sein d'un groupe avec une précision élevée. En l'absence d'amers géographiques, le procédé permet également d'effectuer un recalage collaboratif en utilisant les plateformes comme des amers radios.

**Revendications**

1. - Procédé de recalage collaboratif de plateformes dans un réseau comprenant au moins deux plateformes ($10_1$, $10_2$) et au moins un amer ($20_1$), les positions des plateformes et amers étant connues mais imprécises, le au moins un amer étant en visibilité avec les plateformes qui s'échangent des informations au moyen d'un protocole de communication, ledit procédé comportant au moins les étapes suivantes :

   Considérer un vecteur d'état u constitué des positions des plateformes et du ou des amers,

   Déterminer un vecteur d'observation m de dimension égale à 2M+K+L mesures avec :

   - M mesures de position des plateformes et du ou des amers : une mesure de position par plateforme et une mesure de position par amer,

- L mesures d'angles effectuées pour des couples d'entités plateforme/amer, avec au plus une mesure d'angle pour chaque couple d'entités plateforme/amer,
- K mesures de distances entre des couples d'entités plateforme/amer, Estimer le vecteur d'état u de dimension 2M en utilisant un critère de maximum de vraisemblance prenant en compte le vecteur d'observation m, Déduire à partir du vecteur d'état estimé et conjointement, les coordonnées des positions des au moins deux plateformes et du ou des amers et transmettre ces nouvelles coordonnées aux plateformes et amers en contact avec lesdites plateformes recalées ;

selon lequel le vecteur d'état u est estimé selon l'une ou l'autre des dispositions suivantes :

- en maximisant la probabilité :

$$p(m/u) = \frac{1}{(2\pi)^{\frac{N}{2}}|B|^{1/2}} \exp\left(-\frac{1}{2}[m-h(u)]^T B^{-1}[m-h(u)]\right)$$

- en minimisant la forme quadratique :

$$Q(u) = [m-h(u)]^T B^{-1}[m-h(u)]$$

avec N la dimension du vecteur d'observation, B, la matrice de covariance des mesures, h(u), la fonction d'observation globale du vecteur d'état *u*, T la transposée.

**2.** - Procédé selon la revendication 1, **caractérisé en ce que** l'on utilise comme amer une ou plusieurs plateformes du réseau, la ou lesdites plateformes étant configurées pour permettre un recalage collaboratif et les nouvelles coordonnées étant également transmises aux plateformes jouant le rôle d'amer.

**3.** - Procédé selon la revendication 1, selon lequel, le vecteur d'état étant estimé en fonction de Q(u), ledit procédé utilise l'algorithme de Gauss-Newton et exécute les étapes suivantes :

Développement du vecteur d'état h(u) au premier ordre :

$$h(u) = h(u_0) + H(u - u_0)$$

Calcul de la matrice Jacobienne H, de dimension (2M+L+K, 2M) de la fonction d'observation globale,

$$H = \begin{bmatrix} & \vdots & \vdots & \\ \cdots & \dfrac{\partial h_i}{\partial x_j} & \dfrac{\partial h_1}{\partial y_j} & \cdots \\ & \vdots & \vdots & \end{bmatrix}$$

où la sous-matrice d'observation de position s'écrit:

$$H_p = \begin{bmatrix} & & & \vdots & & & \\ \cdots & -\dfrac{y_i - y_j}{d_{ij}^2} & \dfrac{x_{im} - x_j}{d_{ij}^2} & \cdots & \dfrac{y_i - y_j}{d_{ij}^2} & -\dfrac{x_{im} - x_j}{d_{ij}^2} & \cdots \\ & & & \vdots & & & \end{bmatrix}$$

où

$$d_{ij} = \sqrt{(x_i - x_j)^2 + (y_i - y_j)^2}$$

et la sous-matrice de distance s'écrit :

$$H_d = \begin{bmatrix} & & \vdots & & & \vdots & \\ \ldots & -\left(x_i - x_j\right)/d_{icj} & -\left(y_i - y_j\right)/d_{ij} & \ldots\left(x_i - x_j\right)/d_{icj} & -\left(y_i - y_j\right)/d_{ij} & \ldots \\ & & \vdots & & & & \end{bmatrix}$$

où

$$d_{ij} = \sqrt{\left(x_i - x_j\right)^2 + \left(y_i - y_j\right)^2}$$

L'initialisation $u_0$ est définie par les positions initiales du ou des amers et des plateformes :

$$u_o = \begin{bmatrix} \vdots \\ x_i \\ y_i \\ \vdots \end{bmatrix}$$

on linéarise en $u_0$, avec comme gradient du critère Q:
$\nabla Q = 2.H^T.B^{-1} [m - h(u_0) - H(u - u_0)]$ avec $^T$ signifiant le transposé et en utilisant un estimateur du maximum de vraisemblance

$$\hat{u} = u_0 + \left(H^T B^{-1} H\right)^{-1} H^T B^{-1}\left[m - h(u_0)\right],$$

on itère de façon linéaire sur ledit estimateur du maximum de vraisemblance et en utilisant comme critère d'arrêt un seuil sur la norme de $\|u_i - u_{i-1}\|$ correspondant à l'ensemble du ou des amers et des plateformes.

**4.** - Utilisation du procédé selon l'une des revendications précédentes pour le recalage collaboratif de plateformes dans un réseau de communication radio.

**5.** - Système permettant le recalage collaboratif de plateformes dans un réseau comprenant au moins deux plateformes et au moins un amer, **caractérisé en ce qu'**une plateforme ($10_1$, $10_2$) comprend :

• au moins un premier module de communication (11) configuré pour échanger des informations avec une autre plateforme,
• un dispositif de mesures d'angle (13), un dispositif (14) d'estimation des positions et un module de recalage (16) de la position d'une plateforme (processeur), configurés pour mettre en oeuvre un procédé selon l'une des revendications 1 à 3.

**6.** - Système selon la revendication 5, dans lequel ladite plateforme comprend en outre un module de mesures de distance (12).

**7.** - Système selon l'une des revendications 5 et 6, **caractérisé en ce qu'**il comporte au moins un amer radio comprenant un module de communication (21) configuré pour échanger des informations avec les plateformes, un dispositif de mesures de distance (22), un dispositif de mesures d'angle (23).

**8.** - Système selon l'une des revendications 5 à 7 **caractérisé en ce qu'**une plateforme comprend une base de données contenant les positions du ou des amers utilisés.

**Patentansprüche**

1. Verfahren zum gemeinsamen Neupositionieren von Plattformen in einem Netz, umfassend mindestens zwei Platt-formen ($10_1$, $10_2$) und mindestens eine Landmarke ($20_1$), wobei die Positionen der Plattformen und Landmarken bekannt, aber ungenau, sind, wobei die mindestens eine Landmarke mit den Plattformen in Sichtweite ist, die mittels eines Kommunikationsprotokolls Informationen austauschen, wobei das Verfahren mindestens die folgenden Schritte aufweist:

    Betrachten eines Zustandsvektors $u$, der aus den Positionen der Plattformen und der oder den Landmarke(n) besteht,
    Bestimmen eines Beobachtungsvektors m einer Dimension gleich den Messungen 2M + K + L wobei:

    - M Positionsmessungen der Plattformen und der Landmarke(n): eine Positionsmessung pro Plattform und eine Positionsmessung pro Landmarke,
    - L Winkelmessungen, die für Paare von Einheiten Plattform/Landmarke durchgeführt werden, mit höchstens einer Winkelmessung für jedes Paar von Einheiten Plattform/Landmarke,
    - K Distanzmessungen zwischen Paaren von Einheiten Plattform/Landmarke,

    Schätzen des Zustandsvektors u einer Dimension 2M unter Verwendung eines Kriteriums der maximalen Wahrscheinlichkeit, das den Beobachtungsvektor m berücksichtigt,
    Ableiten der Koordinaten der Positionen der mindestens zwei Plattformen und der Landmarke(n) von dem geschätzten Zustandsvektor aus und zusammen, und Übertragen dieser neuen Koordinaten an die Plattformen und Landmarken in Kontakt mit den neu positionierten Plattformen;
    gemäß welchem der Zustandsvektor $u$ gemäß der einen oder der anderen der folgenden Regelungen geschätzt wird:

    - unter Maximierung der Wahrscheinlichkeit:

$$p(m/u) = \frac{1}{(2\pi)^{\frac{N}{2}}|B|^{1/2}} \exp\left(-\frac{1}{2}[m - h(u)]^T B^{-1}[m - h(u)]\right)$$

    - unter Minimierung der quadratischen Form:

$$Q(u) = [m - h(u)]^T B^{-1}[m - h(u)]$$

    worin N die Dimension des Beobachtungsvektors ist, B die Kovarianzmatrix der Messungen ist, h(u) die globale Beobachtungsfunktion des Zustandsvektors u ist, T die transponierte Matrix ist.

2. Verfahren nach Anspruch 1, **dadurch gekennzeichnet, dass** als Landmarke eine oder mehrere Plattformen des Netzes verwendet werden, wobei die Plattform(en) dafür konfiguriert sind, eine gemeinsame Neupositionierung zu ermöglichen, und die neuen Koordinaten auch an die Plattformen übertragen werden, die die Rolle einer Landmarke spielen.

3. Verfahren nach Anspruch 1, gemäß welchem, wenn der Zustandsvektor in Abhängigkeit von Q(u) geschätzt wird, das Verfahren den Gauss-Newton-Algorithmus verwendet und die folgenden Schritte ausführt:
   Entwicklung des Zustandsvektors h(u) in die erste Ordnung:

$$h(u) = h(u_0) + H(u - u_0)$$

    Berechnung der Jacobi-Matrix H, einer Dimension (2M + L + K, 2M) der globalen Beobachtungsfunktion,

$$H = \begin{bmatrix} & \vdots & & \vdots & \\ \cdots & \dfrac{\partial h_i}{\partial x_j} & & \dfrac{\partial h_1}{\partial y_j} & \cdots \\ & \vdots & & \vdots & \end{bmatrix}$$

worin die Unter-Positionsbeobachtungsmatrix folgendermaßen lautet:

$$H_p = \begin{bmatrix} \cdots & -\dfrac{y_i - y_j}{d_{ij}^2} & \dfrac{x_{im} - x_j}{d_{ij}^2} & \cdots & \dfrac{y_i - y_j}{d_{ij}^2} & -\dfrac{x_{im} - x_j}{d_{ij}^2} & \cdots \\ & & & \vdots & & & \end{bmatrix}$$

worin

$$d_{ij} = \sqrt{\left(x_i - x_j\right)^2 + \left(y_i - y_j\right)^2}$$

und die Unter-Distanzmatrix folgendermaßen lautet:

$$H_d = \begin{bmatrix} \cdots & -\left(x_i - x_j\right)/d_{icj} & -\left(y_i - y_j\right)/d_{ij} & \cdots \left(x_i - x_j\right)/d_{icj} & -\left(y_i - y_j\right)/d_{ij} & \cdots \end{bmatrix}$$

worin

$$d_{ij} = \sqrt{\left(x_i - x_j\right)^2 + \left(y_i - y_j\right)^2}$$

die Initialisierung $u_0$ ist durch die Anfangspositionen der Landmarke(n) und der Plattformen definiert:

$$u_o = \begin{bmatrix} \vdots \\ x_i \\ y_i \\ \vdots \end{bmatrix}$$

es erfolgt eine Linearisierung in $u_0$, mit als Gradient des Kriteriums Q:
$\nabla Q = 2.H^T .B^{-1} [m - h(u_0) - H(u - u_0)]$ worin $.^T$ die transponierte Matrix bedeutet, und unter Verwendung einer Schätzfunktion der maximalen Wahrscheinlichkeit

$$\hat{u} = u_0 + \left(H^T B^{-1} H\right)^{-1} H^T B^{-1} \left[m - h(u_0)\right]$$

es erfolgt eine lineare Iteration über die Schätzfunktion der maximalen Wahrscheinlichkeit und unter Verwendung eines Schwellenwertes als Stoppkriterium für die Norm $\|u_i - u_{i-1}\|$, entsprechend dem Satz der Landmarke(n) und Plattformen.

4. Verwendung des Verfahrens nach einem der vorhergehenden Ansprüche zur gemeinsamen Neupositionierung von Plattformen in einem Funkkommunikationsnetz.

5. System zum gemeinsamen Neupositionieren von Plattformen in einem Netz, umfassend mindestens zwei Plattformen und mindestens eine Landmarke, **dadurch gekennzeichnet, dass** eine Plattform ($10_1$, $10_2$) Folgendes umfasst:

   • mindestens ein erstes Kommunikationsmodul (11), das dafür konfiguriert ist, Informationen mit einer anderen Plattform auszutauschen,
   • eine Winkelmessvorrichtung (13), eine Positionsschätzvorrichtung (14) und ein Modul (16) zum Neupositionieren der Position einer Plattform (Prozessor), die dafür konfiguriert sind, ein Verfahren nach einem der Ansprüche 1 bis 3 zu implementieren.

6. System nach Anspruch 5, wobei die Plattform ferner ein Distanzmessmodul (12) umfasst.

7. System nach einem der Ansprüche 5 und 6, **dadurch gekennzeichnet, dass** es mindestens eine Funklandmarke aufweist, umfassend ein Kommunikationsmodul (21), das dafür konfiguriert ist, Informationen mit den Plattformen auszutauschen, eine Distanzmessvorrichtung (22), eine Winkelmessvorrichtung (23).

8. System nach einem der Ansprüche 5 bis 7, **dadurch gekennzeichnet, dass** eine Plattform eine Datenbank umfasst, die die Positionen der verwendeten Landmarke(n) enthält.

**Claims**

1. A method for the collaborative readjustment of platforms in a network comprising at least two platforms ($10_1$, $10_2$) and at least one landmark ($20_1$), the positions of the platforms and landmarks being known but inaccurate, the at least one landmark being visible to the platforms that exchange information by means of a communication protocol, said method containing at least the following steps:

   considering a state vector u consisting of the positions of the platforms and of the landmark(s),
   determining an observation vector m of dimension equal to 2M + K + L measurements, with:

   - M measurements of position of the platforms and of the landmark(s): one measurement of position per platform and one measurement of position per landmark,
   - L measurements of angles performed for pairs of platform/landmark entities with at most one angle measurement for each pair of platform/landmark entities,
   - K measurements of distances between pairs of platform/landmark entities,

   estimating the state vector u of dimension 2M using a maximum likelihood criterion that takes into account the observation vector m,
   deducing, from the estimated state vector and jointly, the coordinates of the positions of the at least two platforms and of the landmark(s), and transmitting these new coordinates to the platforms and landmarks in contact with said readjusted platforms;
   according to which the state vector u is estimated according to one or the other of the following provision:

   - by maximising the probability:

$$p(m/u) = \frac{1}{(2\pi)^{\frac{N}{2}}|B|^{1/2}} \exp\left(-\frac{1}{2}[m-h(u)]^T B^{-1}[m-h(u)]\right)$$

   - by minimising the quadratic form:

$$Q(u) = [m-h(u)]^T B^{-1}[m-h(u)]$$

N being the dimension of the observation vector, B is the covariance matrix of the measurements, h(u) the global observation function of the state vector *u*, T the transpose.

2. The method according to claim 1, **characterised in that** one or more platforms of the network are used as a landmark, the platform or said platforms being configured to allow collaborative readjustment, and the new coordinates also being transmitted to the platforms acting as a landmark.

3. The method of claim 1, according to which, the state vector being estimated as a function of Q(u), said method uses the Gauss-Newton algorithm and executes the following steps:

performing the first-order expansion of the state vector $h(u)$:

$$h(u) = h(u_0) + H(u - u_0)$$

calculating the Jacobian matrix H, of dimension (2M + L + K, 2M) of the global observation function,

$$H = \left[ \cdots \begin{array}{cc} \vdots & \vdots \\ \dfrac{\partial h_i}{\partial x_j} & \dfrac{\partial h_l}{\partial y_j} \\ \vdots & \vdots \end{array} \cdots \right]$$

where the position observation sub-matrix is written:

$$H_p = \left[ \cdots \quad -\dfrac{y_i - y_j}{d_{ij}^2} \quad \dfrac{x_{im} - x_j}{d_{ij}^2} \quad \cdots \dfrac{y_i - y_j}{d_{ij}^2} \quad -\dfrac{x_{im} - x_j}{d_{ij}^2} \quad \cdots \right]$$

where

$$d_{ij} = \sqrt{(x_i - x_j)^2 + (y_i - y_j)^2}$$

and the distance sub-matrix is written:

$$H_d = \left[ \cdots \quad -(x_i - x_j)/d_{ij} \quad -(y_i - y_j)/d_{ij} \quad \cdots (x_i - x_j)/d_{ij} \quad -(y_i - y_j)/d_{ij} \quad \cdots \right]$$

where

$$d_{ij} = \sqrt{(x_i - x_j)^2 + (y_i - y_j)^2}$$

the initialisation $u_0$ is defined by the initial positions of the landmark(s) and of the platforms:

$$u_o = \begin{bmatrix} \vdots \\ x_i \\ y_i \\ \vdots \end{bmatrix}$$

there is linearisation in $u_0$, with, as gradient of the criterion Q:

$\nabla Q = 2.H^T.B^{-1} [m - h(u_0) - H(u - u_0)]$ with $^T$ signifying the transpose and, using a maximum likelihood estimator:

$$\hat{u} = u_0 + \left(H^T B^{-1} H\right)^{-1} H^T B^{-1} \left[m - h(u_0)\right],$$

there is linear iteration over said maximum likelihood estimator and using, as stopping criterion, a threshold on the norm of $\|u_i - u_{i-1}\|$ corresponding to all of the landmark(s) and platforms.

4. A use of the method according to one of the preceding claims for the collaborative readjustment of platforms in a radio communication network.

5. A system for the collaborative readjustment of platforms in a network comprising at least two platforms and at least one landmark, **characterised in that** a platform ($10_1$, $10_2$) comprises:

   • at least one first communication module (11) configured to exchange information with another platform,
   • an angle measurement device (13), a position estimation device (14) and a module (16) for readjusting the position of a platform (processor), all configured to implement a method according to one of claims 1 to 3.

6. The system according to claim 5, wherein said platform further comprises a distance measurement module (12).

7. The system according to one of claims 5 and 6, **characterised in that** it contains at least one radio landmark comprising a communication module (21) configured to exchange information with the platforms, a distance measurement device (22), an angle measurement device (23).

8. The system according to one of claims 5 to 7, **characterised in that** a platform comprises a database containing the positions of the landmark(s) that are used.

FIG.1    Art antérieur

FIG.2

FIG.3

**FIG.4** Art antérieur

**FIG.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120081248 A1

- US 20110059752 A1